# EUROPÄISCHE PATENTSCHRIFT

(11) **EP 1 422 416 B1**
(45) Veröffentlichungstag und Bekanntmachung des Hinweises auf die Patenterteilung: **08.03.2006**
(21) Anmeldenummer: 03012486.1
(22) Anmeldetag: 02.06.2003
(51) Int. Cl.: F02M 59/44, F02N 11/08, F02N 7/10, F02M 37/18

(54) **Brennkraftmaschine, sowie Verfahren zum Betreiben einer Brennkraftmaschine**
Combustion engine and method for operating a combustion engine
Moteur à combustion et méthode pour opérer un moteur à combustion

(30) Priorität: 23.11.2002 DE 10254735
(43) Veröffentlichungstag der Anmeldung: 26.05.2004
(73) Patentinhaber: ROBERT BOSCH GMBH, 70442 Stuttgart (DE)
(72) Erfinder: Haag, Gottlob, 71706 Markgroeningen (DE)

(56) Entgegenhaltungen:
- EP-A- 0 216 627
- DE-A- 3 304 605
- DE-A- 10 127 516
- DE-A- 19 539 885
- DE-A- 19 818 421
- DE-A- 19 939 051
- US-A1- 2001 011 537

## Beschreibung

### Stand der Technik

Die Erfindung betrifft zunächst eine Brennkraftmaschine mit einem elektrischen Startermotor zum Starten der Brennkraftmaschine und mit einem Kraftstoffsystem mit einer mechanisch angetriebenen Hochdruck-Kraftstoffpumpe.

Eine derartige Brennkraftmaschine ist vom Markt her bekannt. Der elektrische Startermotor ("Anlasser") wird üblicherweise bei Betätigung eines Zündschalters über ein schaltbares Ritzel an die Kurbelwelle der Brennkraftmaschine angekoppelt. Nach erfolgtem Startvorgang wird der elektrische Startermotor wieder von der Kurbelwelle der Brennkraftmaschine entkoppelt und abgeschaltet.

Bei Brennkraftmaschinen mit Kraftstoff-Direkteinspritzung ist ferner eine von der Nockenwelle der Brennkraftmaschine mechanisch angetriebene Hochdruck-Kraftstoffpumpe vorhanden. Diese fördert den Kraftstoff in eine Kraftstoff-Sammelleitung ("Rail"), in der der Kraftstoff unter hohem Druck gespeichert ist. An die Kraftstoff-Sammelleitung sind mehrere Injektoren angeschlossen, die den Kraftstoff direkt in ihnen jeweils zugeordnete Brennräume einspritzen.

Um eine sichere und emissions- sowie verbrauchsoptimale Zündung des Kraftstoffes im Brennraum zu erzielen, ist eine gute Vernebelung des Kraftstoffes durch den Injektor erforderlich. Diese setzt wiederum einen relativ hohen Druck des Kraftstoffes in der Kraftstoff-Sammelleitung voraus. Aus Sicherheitsgründen wird der Druck des Kraftstoffes in der Kraftstoff-Sammelleitung jedoch bei abgestellter Brennkraftmaschine abgesenkt. Da dieser hohe Druck von der mechanisch angetriebenen Hochdruck-Kraftstoffpumpe erst nach einigen Kurbelwellenumdrehungen wieder hergestellt werden kann, liegt zumindest bei den ersten Einspritzungen des Kraftstoffs in die Brennräume der für eine gute Zerstäubung an sich geforderte hohe Kraftstoffdruck nach dem Abstellen der Brennkraftmaschine nicht vor.

Zur Lösung dieses Problems wird in der DE 198 18 421 A1 vorgeschlagen, eine elektrisch angetriebene Vorförderpumpe, welche den Kraftstoff von einem Kraftstoffbehälter zu der Hochdruck-Kraftstoffpumpe fördert, während der Startphase mit erhöhter Förderleistung zu betreiben. Dabei ist jedoch problematisch, dass übliche Vorförderpumpen auch bei erhöhter Förderleistung noch nicht jenen Drück bereitstellen können, der für eine optimale Zerstäubung des Kraftstoffs in den Brennräumen erforderlich ist.

Die DE 199 39 051 A1 schlägt zur Lösung des oben genannten Problems vor, eine zusätzliche, elektrisch angetriebene Hochdruck-Kraftstoffpumpe vorzusehen, welche fluidisch parallel zu der mechanisch angetriebenen Hochdruck-Kraftstoffpumpe geschaltet ist. Die zusätzliche elektrisch angetriebene Hochdruck-Kraftstoffpumpe wird vor oder während der Motorstartphase in Betrieb genommen. Der Nachteil dieses Konzepts liegt jedoch in der Baugröße der zusätzlichen elektrischen Kraftstoffpumpe und in den hohen Zusatzkosten.

In der DE 33 04 605 A1 und der US 2001/0011537 werden Kraftstoffsysteme mit einer Kraftstoffpumpe beschreiben, die von einem Startermotor der Brennkraftmaschine angetrieben werden kann.

Die vorliegende Erfindung hat die Aufgabe, eine Brennkraftmaschine der eingangs genannten Art so weiterzubilden, dass sie möglichst einfach und preiswert baut.

Diese Aufgabe wird bei einer Brennkraftmaschine der eingangs genannten Art dadurch gelöst, dass eine zusätzliche Hochdruck-Kraftstoffpumpe vorhanden ist, welche wenigstens zeitweise direkt von dem elektrischen Startermotor angetrieben wird, und dass die zusätzliche Hochdruck-Kraftstoffpumpe und der elektrische Startermotor eine Baueinheit bilden.

### Vorteile der Erfindung

Bei der erfindungsgemäßen Brennkraftmaschine ist gegenüber einer herkömmlichen Brennkraftmaschine als zusätzliches Teil nur eine kleine Zusatz-Kraftstoffpumpe vorhanden, nicht jedoch ein zusätzlicher Antrieb. Angetrieben wird die zusätzliche Hochdruck-Kraftstoffpumpe von dem ohnehin bei allen üblichen Brennkraftmaschinen vorhandenen elektrischen Startermotor. Die zusätzlich vorzusehenden Kosten sind daher vergleichsweise gering, und der zusätzlich notwendige Bauraum ist klein, da bei dem erfindungsgemäßen Konzept für die Pumpe kein spezieller Antrieb benötigt wird. Darüber hinaus kann bei der erfindungsgemäßen Brennkraftmaschine auch deshalb eine kleine und preiswerte zusätzliche Hochdruck-Kraftstoffpumpe verwendet werden, da sichergestellt ist, dass diese insgesamt nur vergleichsweise kurz in Betrieb ist, denn ihre Betriebsweise entspricht der des Anlassers - sie arbeitet nämlich immer nur sehr kurz. Dadurch, dass der elektrische Startermotor und die zusätzliche Hochdruck-Kraftstoffpumpe eine Baueinheit bilden, wird die Handhabung beim Zusammenbau der Brennkraftmaschine nochmals vereinfacht.

Vorteilhafte Weiterbildungen der Erfindung sind in Unteransprüchen angegeben.

In einer ersten Weiterbildung der erfindungsgemäßen Brennkraftmaschine wird vorgeschlagen, dass eine Antriebswelle der zusätzlichen Hochdruck-Kraftstoffpumpe mit einer Abtriebswelle des elektrischen Startermotors starr und im Betrieb unlösbar gekoppelt ist. Diese Ausgestaltung der erfindungsgemäßen Brennkraftmaschine ist besonders einfach und preiswert.

Möglich ist aber auch, dass eine Antriebswelle der zusätzlichen Hochdruck-Kraftstoffpumpe mit einer Abtriebswelle des elektrischen Startermotors über eine im Betrieb schaltbare Kupplung lösbar gekoppelt ist. Somit kann die zusätzliche Hochdruck-Kraftstoffpumpe während des eigentlichen Startvorgangs von dem elektrischen Startermotor abgekoppelt werden, so dass die gesamte Leistung des elektrischen Startermotors für das Inbewegungsetzen der Kurbelwelle der Brennkraftmaschine zur verfügung steht, und wodurch die Gesamt-Betriebsdauer der zusätzlichen Hochdruck-Kraftstoffpumpe nochmals reduziert wird.

Besonders vorteilhaft ist es, wenn die zusätzliche Hochdruck-Kraftstoffpumpe am elektrischen Startermotor gehaltert ist, denn dann kann auf eine separate Lagerung der zusätzlichen Hochdruck-Kraftstoffpumpe verzichtet werden. Auch der Zusammenbau der Brennkraftmaschine wird hierdurch vereinfacht, da weniger separate Teile handzuhaben sind.

Besonders vorteilhaft ist jene Ausgestaltung der erfindungsgemäßen Brennkraftmaschine, bei welcher der elektrische Startermotor ein hochdrehender Elektromotor, und bei welcher die zusätzliche Hochdruck-Kraftstoffpumpe eine Zahnrad- oder eine G-Rotor-Pumpe oder eine Kolbenpumpe mit großer Toleranz umfasst. Als hochdrehender Elektromotor wird ein Elektromotor verstanden, dessen Abtriebswelle sich mit mindestens 10.000 1/min, gegebenenfalls mit bis zu 15.000 1/min dreht.

Derartige Hochdruck-Kraftstoffpumpen bauen einfach, klein und sind preiswert. Ihr vergleichsweise geringer Wirkungsgrad wird durch die hohen Drehzahlen des elektrischen Startermotors kompensiert.

Die vorliegende Erfindung betrifft auch ein Verfahren zum Betreiben einer Brennkraftmaschine, bei dem eine Kurbelwelle der Brennkraftmaschine von einem elektrischen Startermotor in Drehung versetzt und auf diese Weise die Brennkraftmaschine gestartet werden kann, und bei dem der Kraftstoff von einer mechanisch von der Brennkraftmaschine Hochdruck-Kraftstoffpumpe gefördert wird.

Auch ein solches Verfahren ist vom Markt her bekannt. Bezüglich der Nachteile des bekannten Verfahrens wird auf die oben im Zusammenhang mit der bekannten Brennkraftmaschine angeführten Nachteile verwiesen.

Um das Startverhalten der Brennkraftmaschine insbesondere im Hinblick auf die Emissionen und den Kraftstoffverbrauch zu verbessern, ohne erhebliche Zusatzkosten zu verursachen, wird vorgeschlagen, dass der Kraftstoff wenigstens zeitweise von einer zusätzlichen Hochdruck-Kraftstoffpumpe gefördert wird, welche vom elektrischen Startermotor direkt angetrieben wird und mit dem elektrischen Startermotor eine Baueinheit bildet.

Auch bezüglich der Vorteile des erfindungsgemäßen Verfahrens wird auf die oben angegebenen Vorteile der erfindungsgemäßen Brennkraftmaschine verwiesen. Besonders vorteilhaft wirkt sich das erfindungsgemäße Verfahren dann aus, wenn die Brennkraftmaschine im Normalfall durch Einspritzen von Kraftstoff in einen Brennraum und Zünden des eingespritzten Kraftstoffes, ohne Drehung der Kurbelwelle mittels des elektrischen Startermotors, gestartet wird. Vor allem bei diesem, auch als "Direktstart" bekannten Verfahren führt der hohe Kraftstoffdruck, der beim Starten durch den Betrieb der zusätzlichen Hochdruck-Kraftstoffpumpe bereitgestellt werden kann, zu einer guten Zerstäubung, was wiederum eine sichere Zündung des eingespritzten Kraftstoffes gewährleistet. Gleichzeitig wird das bisweilen unangenehme Anlassergeräusch vermieden, welches auftritt, wenn der Anlasser die Kurbelwelle in Drehung versetzt.

In einer vorteilhaften Weiterbildung des erfindungsgemäßen Verfahrens wird vorgeschlagen, dass die zusätzliche Hochdruck-Kraftstoffpumpe nur während eines Zeitraums von dem elektrischen Startermotor angetrieben wird, welcher vor dem Starten der Brennkraftmaschine liegt. Hierdurch wird die Gesamt-Betriebszeit der zusätzlichen Hochdruck-Kraftstoffpumpe verkürzt, so dass eine einfache und preiswerte Hochdruck-Kraftstoffpumpe verwendet werden kann. Darüber hinaus steht während des eigentlichen Startvorgangs der Brennkraftmaschine die gesamte Leistung des elektrischen Startermotors zum Inbewegungsetzen der Kurbelwelle der Brennkraftmaschine zur Verfügung.

Ferner wird vorgeschlagen, dass der Startermotor zunächst von der Kurbelwelle getrennt ist und bei angekoppelter zusätzlicher Hochdruck-Kraftstoffpumpe betrieben wird, dass dann das Drehmoment des elektrischen Startermotors reduziert wird, und dass dann die Kurbelwelle vom elektrischen Startermotor in Drehung versetzt wird. Dies ermöglicht ein geräuscharmes und die Kupplung schonendes Ankuppeln des elektrischen Startermotors an die Kurbelwelle der Brennkraftmaschine, ohne dass auf die volle Leistung des elektrischen Startermotors zum Antrieb der zusätzlichen Hochdruck-Kraftstoffpumpe verzichtet werden muss.

Möglich ist auch, dass die zusätzliche Hochdruck-Kraftstoffpumpe nur dann von dem elektrischen Startermotor angetrieben wird, wenn ein Kraftstoffdruck unterhalb eines Grenzwerts liegt. So ist es beispielsweise möglich, dass der Druck in einer Kraftstoff-Sammelleitung ("Rail") von einem Sensor erfasst wird. Ist der Druck in der Kraftstoff-Sammelleitung noch ausreichend hoch, beispielsweise wenn die Brennkraftmaschine nur für sehr kurze Zeit abgestellt worden war, wird auf den Betrieb der zusätzlichen Hochdruck-Kraftstoffpumpe verzichtet. Auch hierdurch wird die Gesamt-Betriebsdauer der zusätzlichen Hochdruck-Kraftstoffpumpe reduziert, so dass eine kleine und preiswerte Hochdruck-Kraftstoffpumpe verwendet werden kann.

### Zeichnung

Nachfolgend wird ein besonders bevorzugtes Ausführungsbeispiel der vorliegenden Erfindung unter Bezugnahme auf die beiliegende Zeichnung im Detail erläutert. In der Zeichnung zeigen:
- Figur 1: eine schematische Darstellung eines ersten Ausführungsbeispiels einer Brennkraftmaschine mit einer zusätzlichen Hochdruck-Kraftstoffpumpe;
- Figur 2: einen teilweiser. Schnitt durch die zusätzliche Hochdruck-Kraftstoffpumpe von Figur 1;
- Figur 3: ein Ablaufdiagramm zum Betrieb der zusätzlichen Hochdruck-Kraftstoffpumpe von Figur 1; und
- Figur 4: eine Darstellung ähnlich Figur 1 eines zweiten Ausführungsbeispiels einer Brennkraftmaschine.

### Beschreibung des Ausführungsbeispiels

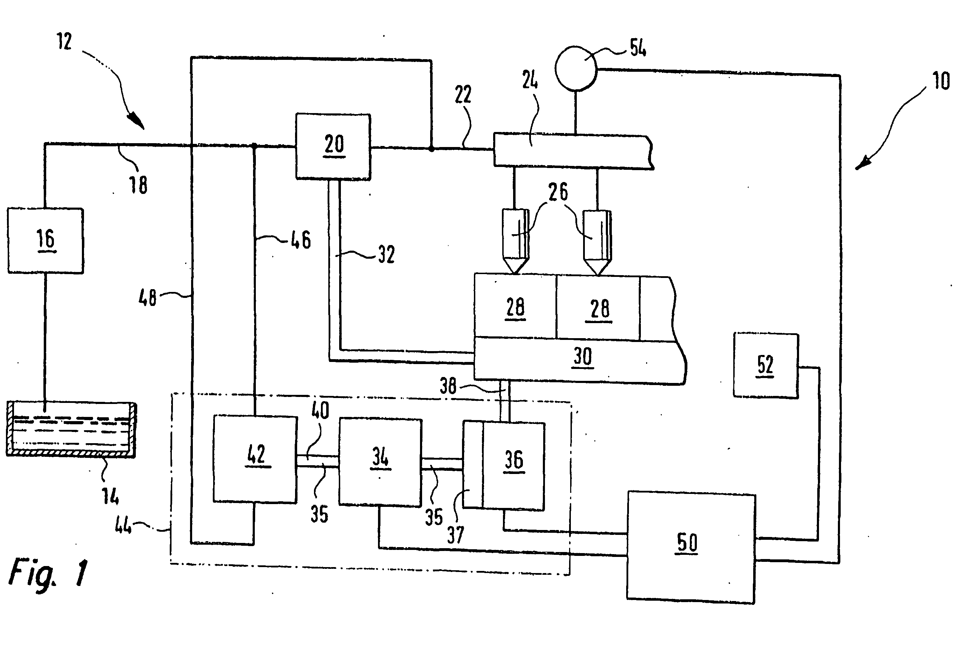

Eine Brennkraftmaschine trägt in Figur 1 insgesamt das Bezugszeichen 10. Sie umfasst ein Kraftstoffsystem 12.

Das Kraftstoffsystem 12 umfasst wiederum einen Kraftstoffbehälter 14, aus dem eine elektrische Kraftstoffpumpe 16 Kraftstoff fördert. Die elektrische Kraftstoffpumpe 16 fördert den Kraftstoff über eine Niederdruck-Kraftstoffleitung 18 zu einer Hochdruck-Kraftstoffpumpe 20. Die elektrische Kraftstoffpumpe 16 bildet also eine "Vorförderpumpe" für die Hochdrdck-Kraftstoffpumpe 20.

Die Hochdruck-Kraftstoffpumpe 20 verdichtet den Kraftstoff auf einen sehr hohen Druck und fördert ihn über eine Hochdruck-Kraftstoffleitung 22 zu einer Kraftstoff-Sammelleitung 24. In dieser kann der Kraftstoff unter sehr hohem Druck gespeichert werden. An die Kraftstoff-Sammelleitung 24 sind mehrere Injektoren 26 angeschlossen, die den Kraftstoff direkt in ihnen jeweils zugeordnete Brennräume 28 einspritzen. Durch eine Verbrennung des eingespritzten Kraftstoffs in den Brennräumen 28 wird eine Kurbelwelle 30 in Bewegung gesetzt, welche, üblicherweise unter Zwischenschaltung einer Nockenwelle, über eine mechanische Verbindung 32 die Hochdruck-Kraftstoffpumpe 20 antreibt.

Die Brennkraftmaschine 10 umfasst auch einen elektrischen Startermotor 34, dessen Abtriebswelle 35 mit einer schaltbaren Kupplung 36 und einem Zwischengetriebe 37 verbunden ist. Die schaltbare Kupplung 36 und das Getriebe 37 sind über eine mechanische Verbindung 38 mit der Kurbelwelle 30 verbunden. Die Abtriebswelle 35 des elektrischen Startermotors 34 ist über eine mechanische Verbindung 40 aber auch mit einer zusätzlichen Hochdruck-Kraftstoffpumpe 42 verbunden. Der elektrische Startermotor 34, die schaltbare Kupplung 36 und das Getriebe 37 und die zusätzliche Hochdruck-Kraftstoffpumpe 42 sind in einer starren Baueinheit 44 zusammengefasst.

Die zusätzliche Hochdruck-Kraftstoffpumpe 42 ist ferner fluidisch parallel zu der mechanisch angetriebenen Hochdruck-Kraftstöffpumpe 20 angeordnet. Dies bedeutet, dass sie einlassseitig über einen Kanal 46 an die Niederdruck-Kraftstoffleitung 18 angeschlossen ist, wohingegen sie auslassseitig über einen Hochdruckkanal 48 an die Hochdruck-Kraftstoffleitung 22 angeschlossen ist. Es versteht sich, dass durch eine entsprechende geeignete Anordnung von Rückschlagventilen der unabhängige Betrieb der mechanisch angetriebenen Hochdruck-Kraftstoffpumpe 20 bzw. der zusätzlichen Hochdruck-Kraftstoffpumpe 42 gewährleistet ist.

Der Betrieb der Brennkraftmaschine.l0 wird von einem Steuer- und Regelgerät 50 gesteuert bzw. geregelt. Das Steuer- und Regelgerät 50 ist eingangsseitig mit einem Zündschalter 52 verbunden. Ferner enthält es Signale von einem Drucksensor 54, welcher den Druck in der Kraftstoff-Sammelleitung 24 erfasst. Ausgangsseitig ist das Steuer-und Regelgerät 50 einerseits mit der schaltbaren Kupplung 36 und andererseits mit dem elektrischen Startermotor 34 verbunden.

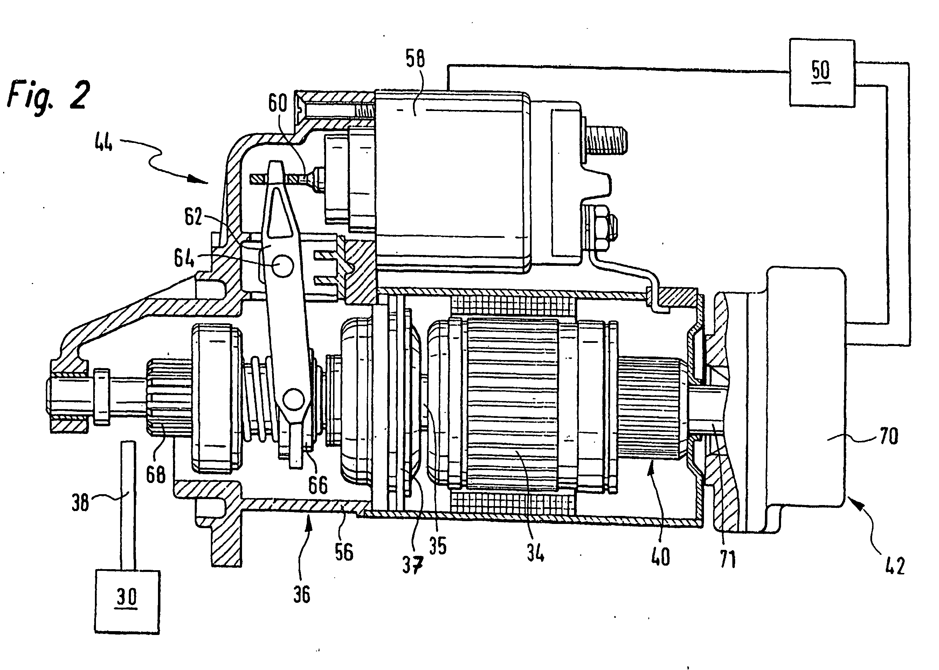

Die Baueinheit 44, welche den elektrischen Startermotor 34, die schaltbare Kupplung 36, das Getriebe 37 , und die zusätzliche Hochdruck-Kraftstoffpumpe 42 umfasst, ist im Detail in Figur 2 dargestellt: Der elektrische Startermotor 34, die schaltbare Kupplung 36, und das Getriebe 37 sind in einem gemeinsamen, mehrteiligen Gehäuse 56 untergebracht. Bei dem Getriebe 37 handelt es sich um ein Planetengetriebe.

Die schaltbare Kupplung 36 umfasst einen schaltbaren. Elektromagnet 58, welcher auch als "Einspurmagnet" bezeichnet wird. Ein Schaltelement 60 des Elektromagneten 58 ist mit einem Hebel 62 verbunden. Der Hebel 62 ist bei 64 schwenkbar gelagert. Das andere Ende des Hebels 62 ist mit einer Schalthülse 66 verbunden, mit welcher ein "Einspurritzel" 68, welches abtriebsseitig vom Getriebe 37 angeordnet ist, in Eingriff mit der mechanischen Verbindung 38 gebracht werden kann.

Die zusätzliche Hochdruck-Kraftstoffpumpe 42 ist in Figur 2 auf der rechten Seite angeordnet. Sie umfasst ebenfalls ein Gehäuse 70, welches auf hier nicht näher dargestellte Art und Weise fest an das Gehäuse 56 des elektrischen Startermotors 34, der schaltbarer Kupplung 36 und des Getriebes 37 angeflanscht ist. Bei der zusätzlichen Hochdruck-Kraftstoffpumpe 42 handelt es sich um eine einfache und mit vergleichsweise großen Toleranzen hergescellte Einzylinder-Radialkolbenpumpe. Eine Antriebswelle 71 der zusätzlichen Hochdruck-Kraftstoffpumpe 42 ist in dem Gehäuse 70 gelagert und über die mechanische Verbindung 40 mit der Abtriebswelle des elektrischen Startermotors 34 starr und unlösbar gekoppelt.

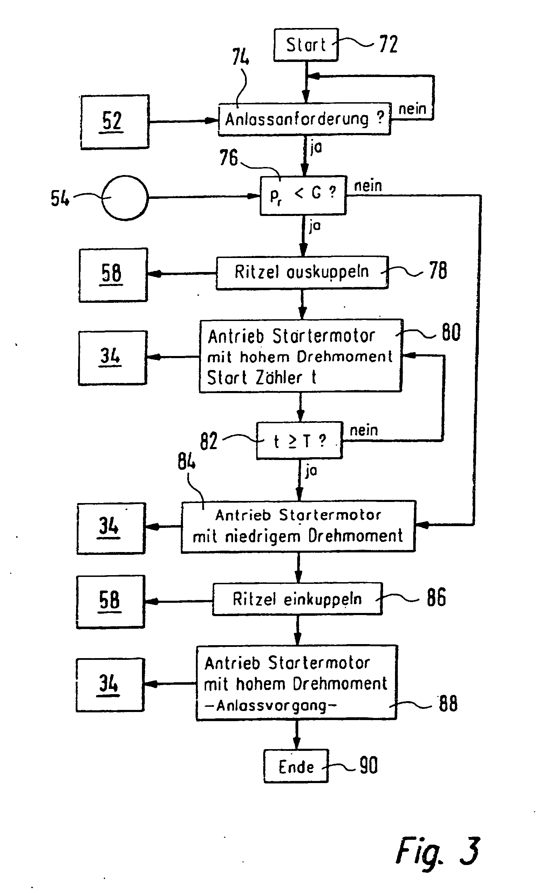

Der Startvorgang der Brennkraftmaschine 10 wird nun unter Bezugnahme auf das in Figur 3 dargestellte Ablaufdiagramm erläutert. Das entsprechende Verfahren ist als Computerprogramm auf einem Speicher des Steuer- und Regelgeräts 50 abgespeichert. Nach einem Startblock 72 wird im Block 74 geprüft, ob eine Anlassaufforderung vorliegt. Hierzu werden die Signale des Zündschalters 52 ausgewertet. Wenn im Block 74 festgestellt wird, dass der Benutzer die Brennkraftmaschine 10 starten will, wird im Block 76 geprüft, ob der Druck pr des Kraftstoffes in der Kraftstoff-Sammelleitung 24 unterhalb eines Grenzwerts G liegt. Der Druck pr wird dabei vom Sensor 54 erfasst, welcher ein entsprechendes Signal an das Steuer- und Regelgerät 50 weiterleitet. Der Grenzwert G ist so gewählt, dass dann, wenn der Kraftstoffdruck pr in der Kraftstoff-Sammelleitung mindestens in etwa gleich dem Grenzwert G ist, von einer guten Zerstäubung des Kraftstoffs durch die Injektoren 26 ausgegangen werden kann.

Ist die Brennkraftmaschine 10 für einen längeren Zeitraum abgestellt gewesen, dürfte üblicherweise der Kraftstoffdruck pr auf einen Wert unterhalb der Grenzwerts G abgesunken sein. Dies hängt damit zusammen, dass der Druck in der Kraftstoff-Sammelleitung 24 bei abgeschalteter Brennkraftmaschine 10 aus Sicherheitsgründen bewusst abgesenkt wird. Auf diese Weise soll unter anderem vermieden werden, dass bei einem undichten Injektor 26 bei abgestellter Brennkraftmaschine 10 Kraftstoff in einen Brennraum 28 gelangt. Das Absinken des Kraftstoffdrucks pr in der Kraftstoff-Sammelleitung 24 erfolgt jedoch üblicherweise vergleichsweise langsam, so dass nach einer nur kurzen Abstellphase der Brennkraftmaschine 10 möglicherweise noch ein ausreichender und oberhalb des Grenzwerts G liegender Kraftstoffdruck pr in der Kraftstoff-Sammelleitung 24 herrscht.

Wird im Block 76 jedoch festgestellt, dass der Kraftstoffdruck pr in der Kraftstoff-Sammelleitung 24 unterhalb des Grenzwerts G liegt, wird im Block 78 der Elektromagnet 58 so angesteuert, dass das Einspurritzel 68 von der Kurbelwelle 30 entkoppelt ist. Weiter wird im Block 80 der elektrische Startermotor 34 so angesteuert, dass er mit voller Leistung, d. h. mit hohem Drehmoment und hoher Drehzahl, arbeitet. Gleichzeitig wird ein Zähler t in Gang gesetzt. Dabei versteht es sich, dass im Normalfall bei einer festgestellten Anlassaufforderung auch die elektrische Vorförderpumpe 16 in Betrieb genommen wird. Am Einlass der zusätzlichen Kraftstoffpumpe 42 liegt also der von der Vorförderpumpe 16 bereitgestellte Vordruck, im Allgemeinen ca. 6 bar, an.

Im Block 82 wird der aktuelle Stand des Zählers t mit einem Grenzwert T verglichen. Sobald der Grenzwert T erreicht ist, wird im Block 84 der elektrische Startermotor 34 so angesteuert, dass er nur noch mit vergleichsweise geringer Leistung, also geringem Drehmoment, arbeitet. Dann wird im Block 86 der Elektromagnet 58 so angesteuert, dass das Einspurritzel 68 eine Verbindung des elektrischen Startermotors 34 mit der Kurbelwelle 30 herstellt. Weiter wird im Block 88 mit eingekuppeltem Einspurritzel 68 der elektrische Startermotor 34 wieder so angesteuert, dass er mit hoher Leistung, also mit hohem Drehmoment, arbeitet.

Ferner wird die übliche Anlasssequenz der Brennkraftmaschine 10 in Gang gesetzt. Diese Anlasssequenz umfasst beispielsweise das Einschalten der Zündung, die Ansteuerung der Injektoren 26, so class diese die für den Start unter den gegebenen Bedingungen erforderliche Kraftstoffmenge in die Brennräume 28 einspritzen, und das Auskuppeln des Einspurritzels 68 und das Abschalten des elektrischen Startermotors 34, sobald die Brennkraftmaschine 10 angesprungen ist. Das in Figur 3 dargestellte Verfahren endet im Block 90.

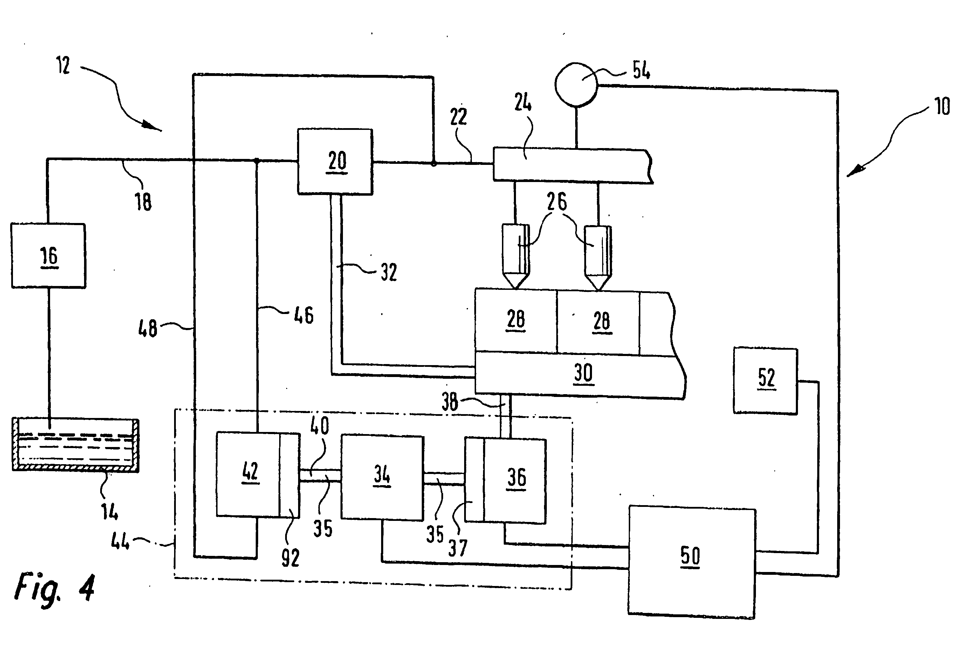

In Figur 4 ist ein zweites Ausführungsbeispiel einer Brennkraftmaschine 10 dargestellt. Dabei tragen solche Elemente und Bereiche, welche äquivalente Funktionen zu Elementen und Bereichen des in den Figuren 1 bis 3 dargestellten Ausführungsbeispiels aufweisen, die gleichen Bezugszeichen. Sie sind nicht nochmals im Detail erläutert.

Der wesentliche Unterschied der in Figur 4 dargestellten Brennkraftmaschine 10 zu jener der Figuren 1 bis 3 besteht darin, dass zwischen der zusätzlichen Hochdruck-Kraftstoffpumpe 42 und dem elektrischen Startermotor 34 eine schaltbare Kupplung 92 vorgesehen ist. Ober diese kann die zusätzliche Hochdruck-Kraftstoffpumpe 42 vom elektrischen Startermotor 34 entkoppelt werden. In der Praxis bedeutet dies, dass die zusätzliche Hochdruck-Kraftstoffpumpe 42 nur während eines Zeitraums von dem elektrischen Startermotor 34 angetrieben wird, welcher vor dem Starten, d. h. dem Inbewegungsetzen der Kurbelwelle 30, der Brennkraftmaschine 10 liegt.

Alternativ zu dem in Figur 3 dargestellten Verfahren ist es auch möglich, dass der Anlassvorgang der Brennkraftmaschine 10 ohne Betätigung des elektrischen Startermotors 34 erfolgt. Die Inbetriebnahme der Brennkraftmaschine 10 erfolgt in diesem Fall ausschließlich durch die Einspritzung von Kraftstoff durch einen Injektor 26 in einen ihm zugeordneten Brennraum 28, und durch die anschließende Entzündung des Kraftstoff-LufL-Gernisches in diesem Brennraum 23. Voraussetzung ist allerdings eine entsprechende Positionierung des Kolbens in dem Zylinder, in dem die Ersteinspritzung von Kraftstoff erfolgt.

Ferner kann das Ende des eigentlichen Betriebs der zusätzlichen Hochdruck-Kraftstoffpumpe anstelle durch einen Zähler durch eine Überwachung des Drucks pr in der Kraftstoff-Sammelleitung 24 bestimmt werden. In diesem Falle würde der Anlasser wieder mit geringem Drehmoment angetrieben werden, wenn der Druck pr in der Kraftstoff-Sammelleitung einen Grenzwert überschreitet.

Weiter sei darauf hingewiesen, dass der Druckaufbau in der Kraftstoff-Sammelleitung 24 beispielsweise auch dadurch initiiert werden kann, dass ein Betätigungssignal einer drahtlosen Schließanlage des Fahrzeugs, in welches die Brennkraftmaschine eingebaut ist, oder ein Betätigungssignal beispielsweise einer Fahrertüre dieses Kraftfahrzeugs erfasst wird.

## Patentansprüche

1. Brennkraftmaschine (10) mit einem elektrischen Startermotor (34) zum Starten der Brennkraftmaschine (10) und mit einem Kraftstoffsystem (12) mit einer mechanisch angetriebenen Hochdruck-Kraftstoffpumpe (20), **dadurch gekennzeichnet, dass** eine zusätzliche Hochdruck-Kraftstoffpumpe (42) vorhanden ist, welche wenigstens zeitweise direkt von dem elektrischen Startermotor (34) angetrieben wird, und dass die zusätzliche Hochdruck-Kraftstoffpumpe (42) und der elektrische Startermotor (34) Teil einer gemeinsamen Baueinheit (44) sind.

2. Brennkraftmaschine (10) nach Anspruch 1, **dadurch gekennzeichnet, dass** eine Antriebswelle (71) der zusätzlichen Hochdruck-Kraftstoffpumpe (42) mit einer Abtriebswelle (35) des elektrischen Startermotors (34) starr und im Betrieb unlösbar gekoppelt ist.

3. Brennkraftmaschine (10) nach Anspruch 1, **dadurch gekennzeichnet, dass** eine Antriebswelle (71) der zusätzlichen Hochdruck-Kraftstoffpumpe (42) mit einer Abtriebswelle (35) des elektrischen Startermotors (34) über eine im Betrieb schaltbare Kupplung (92) lösbar gekoppelt ist.

4. Brennkraftmaschine (10) nach einem der vorhergehenden Ansprüche, **dadurch gekennzeichnet, dass** die zusätzliche Hochdruck-Kraftstoffpumpe (42) und der elektrische Startermotor (34) gemeinsam gehaltert sind.

5. Brennkraftmaschine (10) nach einem der vorhergehenden Ansprüche, **dadurch gekennzeichnet, dass** der elektrische Startermotor einen hochdrehenden Elektromotor (34) umfasst, und dass die zusätzliche Hochdruck-Kraftstoffpumpe eine Zahnrad- oder eine G-Rotor-Pumpe oder eine Kolbenpumpe (42) mit großer Toleranz umfasst.

6. Verfahren zum Betreiben einer Brennkraftmaschine (10), bei dem eine Kurbelwelle (30) der Brennkraftmaschine (10) von einem elektrischen Startermotor (34) in Drehung versetzt und auf diese Weise die Brennkraftmaschine (10) gestartet werden kann, und bei dem der Kraftstoff von einer mechanisch von der Brennkraftmaschine (10) angetriebenen Hochdruck-Kraftstoffpumpe (20) gefördert wird, **dadurch gekennzeichnet, dass** der Kraftstoff wenigstens zeitweise von einer zusätzlichen Hochdruck-Kraftstoffpumpe (42) gefördert wird, welche vom elektrischen Startermotor (34) direkt angetrieben wird und mit dem elektrischen Startermotor eine Baueinheit bildet, wobei die Brennkraftmaschine (10) im Normalfall durch Einspritzen von Kraftstoff in einen Brennraum (28) und Zünden des eingespritzten Kraftstoffes, ohne Drehung der Kurbelwelle (30) mittels des elektrischen Startermotors (34), gestartet wird.

7. Verfahren nach Anspruch 6, **dadurch gekennzeichnet, dass** die zusätzliche Hochdruck-Kraftstoffpumpe (42) nur während eines Zeitraums von dem elektrischen Startermotor (34) angetrieben wird, welcher vor dem Starten der Brennkraftmaschine (10) liegt.

8. Verfahren nach einem der Ansprüche 6 oder 7, **dadurch gekennzeichnet, dass** der Startermotor (34) zunächst von der Kurbelwelle (30) getrennt ist und bei angekoppelter zusätzlicher Hochdruck-Kraftstoffpumpe (34) betrieben wird, dass dann das Drehmoment des elektrischen Startermotors (34) reduziert wird, und dass dann die Kurbelwelle (30) vom elektrischen Startermotor (34) in Drehung versetzt wird.

9. Verfahren nach einem der Ansprüche 6 bis 8, **dadurch gekennzeichnet, dass** die zusätzliche Hochdruck-Kraftstoffpumpe (42) nur dann von dem elektrischen Startermotor (34) angetrieben wird, wenn ein Kraftstoffdruck (pr) unterhalb eines Grenzwerts (G) liegt.

## Claims

1. Internal combustion engine (10) having an electric starter motor (34) for starting the internal combustion engine (10) and having a fuel system (12) with a mechanically driven high pressure fuel pump (20), **characterized in that** an additional high pressure fuel pump (42) is present which is driven at least at times directly by the electric starter motor (34), and **in that** the additional high pressure fuel pump (42) and the electric starter motor (34) are part of a common unit.

2. Internal combustion engine (10) according to Claim 1, **characterized in that** a driveshaft (71) of the additional high pressure fuel pump (42) is coupled to an output shaft (35) of the electric starter motor (34) in a rigid and, during operation, non-detachable manner.

3. Internal combustion engine (10) according to Claim 1, **characterized in that** a driveshaft (71) of the additional high pressure fuel pump (42) is coupled to an output shaft (35) of the electric starter motor (34) in a detachable manner by means of a clutch (92) which can be engaged and disengaged during operation.

4. Internal combustion engine (10) according to one of the preceding claims, **characterized in that** the additional high pressure fuel pump (42) and the electric starter motor (34) are fastened together.

5. Internal combustion engine (10) according to one of the preceding claims, **characterized in that** the electric starter motor comprises a high speed electric motor (34), and **in that** the additional high pressure fuel pump comprises a gear pump or a centrifugal pump or a piston pump (42) with a large tolerance.

6. Method for operating an internal combustion engine (10) in which a crankshaft (30) of the internal combustion engine (10) is set in rotation by an electric starter motor (34), it being possible to start the internal combustion engine (10) in this way, and in which the fuel is supplied by a high pressure fuel pump (20) which is mechanically driven by the internal combustion engine (10), **characterized in that** the fuel is supplied at least at times by an additional high pressure fuel pump (42) which is driven directly by the electric starter motor (34) and forms a unit with the electric starter motor, the internal combustion engine (10) normally being started by the injection of fuel into a combustion chamber (28) and ignition of the injected fuel without rotation of the crankshaft (30) by the electric starter motor (34).

7. Method according to Claim 6, **characterized in that** the additional high pressure fuel pump (42) is only driven by the electric starter motor (34) in a period of time before the internal combustion engine (10) is started.

8. Method according to one of Claims 6 or 7,
**characterized in that** the starter motor (34) is initially separated from the crankshaft (30) and is driven with the additional high pressure fuel pump (42) coupled, **in that** the torque of the electric starter motor (34) is then reduced, and **in that** the crankshaft (30) is then set in rotation by the electric starter motor (34).

9. Method according to one of Claims 6 to 8, **characterized in that** the additional high pressure fuel pump (42) is driven by the electric starter motor (34) only when a fuel pressure (pr) is lower than a threshold (G).

## Revendications

1. Moteur à combustion interne (10) doté d'un démarreur électrique (34) pour démarrer le moteur à combustion interne (10) et d'un système de carburant (12) avec un pompe à carburant à haute pression (20) entraînée mécaniquement,
**caractérisé par**
une pompe à carburant à haute pression supplémentaire (42) entraînée au moins parfois directement par le démarreur électrique (34) et la pompe à carburant à haute pression supplémentaire (42) et le démarreur électrique (34) font partie d'un module commun (44).

2. Moteur à combustion interne (10) selon la revendication 1,
**caractérisé en ce que**
l'arbre de transmission (71) de la pompe à carburant à haute pression supplémentaire (42) est couplé de manière rigide à un arbre de sortie (35) du démarreur électrique (34) et de manière inamovible pendant le fonctionnement.

3. Moteur à combustion interne (10) selon la revendication 1,
**caractérisé en ce que**
l'arbre de transmission (71) de la pompe à carburant à haute pression supplémentaire (42) est couplé de manière amovible à un arbre de sortie (35) du démarreur électrique (34) par un embrayage (92) commutable en fonctionnement.

4. Moteur à combustion interne (10) selon l'une quelconque des revendications précédentes,
**caractérisé en ce que**
la pompe à carburant à haute pression supplémentaire (42) et le démarreur électrique (34) sont maintenus ensemble.

5. Moteur à combustion interne (10) selon l'une quelconque des revendications précédentes,
**caractérisé en ce que**
le démarreur électrique comprend un moteur électrique (34) à vitesse de rotation élevée et la pompe à carburant à haute pression supplémentaire comprend une pompe à engrenages, une pompe G-Rotor ou encore une pompe à piston (42) de tolérance élevée.

6. Procédé de gestion d'un moteur à combustion interne (10) selon lequel un vilebrequin (30) du moteur à combustion interne (10) est mis en rotation par un démarreur électrique (34), et ainsi le moteur à combustion interne (10) peut être démarré et le carburant est transféré par une pompe à carburant à haute pression (20) entraînée mécaniquement par le moteur à combustion interne (10),
**caractérisé en ce que**
le carburant est transféré au moins parfois par une pompe à carburant à haute pression supplémentaire (42) entraînée directement par le démarreur électrique (34) et formant un module avec le démarreur électrique, le moteur à combustion interne (10) étant démarré normalement par une injection de carburant dans une chambre de combustion (28) et par l'allumage du carburant injecté, sans que le démarreur électrique (34) fasse tourner le vilebrequin (30).

7. Procédé selon la revendication 6,
**caractérisé en ce que**
la pompe à carburant à haute pression supplémentaire (42) n'est entraînée par le démarreur électrique (34) que pendant un certain laps de temps avant le démarrage du moteur à combustion interne (10).

8. Procédé selon l'une quelconque des revendications 6 ou 7,
**caractérisé en ce que**
le démarreur (34) est tout d'abord séparé du vilebrequin (30) et est entraîné lorsque la pompe à carburant à haute pression (34) supplémentaire est couplée, le couple de rotation du démarreur électrique (34) est ensuite réduit et le vilebrequin (30) est décalé en rotation par le démarreur électrique (34).

9. Procédé selon l'une quelconque des revendications 6 à 8,
**caractérisé en ce que**
la pompe à carburant à haute pression supplémentaire (42) n'est entraînée par le démarreur électrique (34) que si une pression de carburant (pr) est inférieure à une valeur de seuil (G).
